(19) Europäisches Patentamt
European Patent Office
Office européen des brevets

(11) Veröffentlichungsnummer: **0 115 470**
**B1**

# (12) EUROPÄISCHE PATENTSCHRIFT

(45) Veröffentlichungstag der Patentschrift: **17.12.86**

(51) Int. Cl.⁴: **C 07 C 103/38**, A 01 N 37/22

(21) Anmeldenummer: **84810031.9**

(22) Anmeldetag: **19.01.84**

## (54) Optisch aktives N-(1'-Methyl-2'-methoxyethyl)-N-chloracetyl-2,6-di-methylanilin als Herbizid.

(30) Priorität: **25.01.83 CH 399/83**

(43) Veröffentlichungstag der Anmeldung: **08.08.84 Patentblatt 84/32**

(45) Bekanntmachung des Hinweises auf die Patenterteilung: **17.12.86 Patentblatt 86/51**

(84) Benannte Vertragsstaaten: **BE CH DE FR GB IT LI NL**

(56) Entgegenhaltungen:
**EP-A-0 077 755**
**FR-A-2 455 575**
**US-A-3 952 056**

**CHEMICAL ABSTRACTS, Band 97, Nr. 9, 30. August 1982, Seite 569, Nr. 71671h, Columbus, Ohio, US, H. MOSER u.a.: "Effect of atropisomerism and chiral center on the biological activity of Metolachlor"**

**Die Akte enthält technische Angaben, die nach dem Eingang der Anmeldung eingereicht wurden und die nicht in dieser Patentschrift enthalten sind.**

(73) Patentinhaber: **CIBA- GEIGY AG, Klybeckstrasse 141, CH- 4002 Basel (CH)**

(72) Erfinder: **Moser, Hans, Dr., Blumenrain 3, CH- 4312 Magden (CH)**
Erfinder: **Vogel, Christian, Dr., Leimgrubenweg 23, CH- 4102 Binningen (CH)**

**EP 0 115 470 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft das Isomere des N-(1'-Methyl-2'-methoxyethyl)-N-chloracetyl-2,6-dimethylanilins mit der S(-)-Konfiguration, ein Verfahren zu seiner Herstellung, herbizide Mittel die dieses Isomere als aktive Komponente enthalten, sowie die Verwendung dieses Isomeren zur Bekämpfung von Unkräutern und zur Regulierung des Pflanzenwuchses.

Das N-(1'-Methyl-2'-methoxyethyl)-H-chloracetyl-2,6-dimethylanilin ist als Racemat bereits bekannt. Dieses Racemat, seine Herstellung und Verwendung als Pflanzenregulator und Herbizid wird beispielsweise in den Patentschriften US-PS 3,952,056, DE-PS 2,305,495, FR-PS 2,171,171, GB-PS 1,442,473 beschrieben. Die Auftrennung einer Ähnlichen aus der US-PS 3,952,056 bekannten, herbizid aktiven Substanz ist in Z. Naturforsch. 37 B (1982) s. 451-462 beschrieben.

Im Molekül des N-(1'-Methyl-2'-methoxyethyl)-N-chloracetyl-2.6-dimethyl-anilins der Formel I

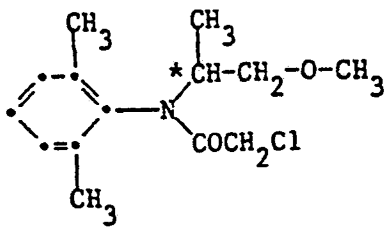

(I)

ist ein chirales Kohlenstoffatom (C*) vorhanden. Bei der Herstellung von N-(1'-Methyl-2'-methoxyethyl)-N-chloracetyl-2.6-dimethylanilin nach den bisher bekannten Methoden wird diese Verbindung als Enantiomerengemisch erhalten. Ueber die biologische Wirkung der beiden Enantiomeren ist bisher nichts bekanntgeworden.

Es wurde nun gefunden, dass das Isomere des N-(1'-Methyl-2'-methoxy-ethyl)-N-chloracetyl-2,6-dimethylanilins mit S(-)-Konfiguration eine wesentlich bessere herbizide Wirkung besitzt als das bisher bekannte racemische Gemisch. Es wirkt in Reiskulturen phytotoxischer gegen Echinochlog crus galli und ist gleichzeitig toleranter gegen den Reis als das Racemat.

Gegenstand der Erfindung ist daher das linksdrehende Isomere von N-(1'-Methyl-2'-methoxyethyl)-N-chloracetyl-2,6-dimethylanilin mit S-Konfiguration. Das erfindungsgemässe Isomere wird nachfolgend als S(-)-N-(1'-Methyl-2'-methoxyethyl)-N-chloracetyl-2,6-dimethylanilin bezeichnet.

Ein weiterer Gegenstand der Erfindung ist ein Verfahren zur Herstellung des Isoneren von N-(1'-Methyl-2'-methoxyethyl)-N-chloracetyl-2,6-di-methylanilins mit S(-)-Konfiguration, das dadurch gekennzeichnet ist, dass man S(-)-N-(2,6-Dimethylphenyl)-alanin der Formel II

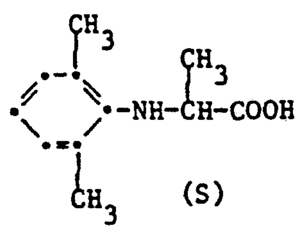

(II)

zu S(-)-N-(1'-Methyl-2'-hydroxyethyl)-2,6-dimethylanilin der Formel III

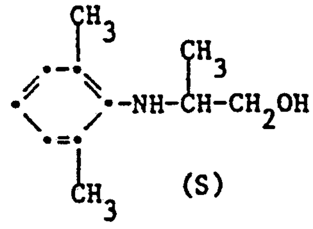

(III)

reduziert, dieses am Stickstoff chloracetyliert und das erhaltene S(+)-N-(1'-Methyl-2'-hydroxyethyl)-N-chloracetyl-2,6-dimethylanilin der Formel IV

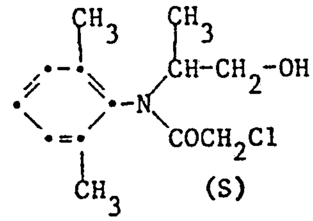

(IV)

anschliessend in Gegenwart einer starken Säure mit Methanol an der 2'-Hydroxygruppe veräthert.

Das als Ausgangsmaterial benötigte S(-)-N-(2,6-Dimethyl-Phenyl)-alanin kann erhalten werden, indem man racemisches N-(2,6-Dimethyl-phenyl)-alanin in einem geeigneten Lösungsmittel mit einer optisch aktiven Base in diastereomere Salze überführt, die diastereomeren Salze durch fraktionierte Kristallisation trennt und anschliessend spaltet.

Das racemische N-(2,6-DimethylPhenyl)-alanin kann seinerseits durch Umsetzung von 2,6-Dimethyl-anilin in Gegenwart einer Base mit einem 2-Halogen-propionsäureester und anschliessender Verseifung des Reaktionsproduktes erhalten werden.

Als optisch aktive Basen können beispielsweise S(+)-2-Amino-1-butanol, R(-)-2-Amino-1-butanol L-(+)-threo-2-Amino-phenyl-1,3-propandiol, (-)-Brucin, (+)-Chinidin, (-)-Chinin, (-)-Chinchonidin, (+)-Cinchonin, (+)-Dehydroabietylamin, (+)-Yohimbin, (-)-Nikotin, (-)-Ephedrin, (+)-Ephedrin, (-)-N-Methylephedrin, R(+)-1-Phenylethylamin, S(-)-1-Phenylethylamin, (+)-Pseudoephedrin und (-)-α-Phenyl-ß-p-tolylethylamin verwendet werden. Unter den vorgenannten optisch aktiven Basen ist R(+)-1-Phenylethylamin besonders geeignet.

Die Reduktion des S(-)-N-(2,6-Dimethylphenyl)-alanins der Formel II zum S(-)-N-(1'-Methyl-2'-hydroxyethyl)-2,6-dimethylanilin der Formel III erfolgt zweckmässig in einem inerten Lösungsmittel. Geeignete inerte Lösungsmittel sind beispielsweise aliphatische und aromatische Kohlenwasserstoffe, sowie insbesondere Ether. Als Beispiele für geeignete Lösungsmittel seien Hexan, Cyclohexan, Benzol, Toluol, Diethylether, Tetrahydrofuran und Dioxan genannt.

Als Reduktionsmittel sind Lithiumaluminiumhydrid und insbesondere Boran geeignet. Das Boran wird vorzugsweise in Form eines Komplexes, insbesondere als Boran-Dimethylsulfid-Komplex oder als Boran-Tetrahydrofuran-Komplex, eingesetzt. Das Reduktionsmittel wird in der Regel in stöchiometrischer Menge bis zu einem Ueberschuss von 100 % bezogen auf die stöchiometrische Menge verwendet. Die Reaktionstemperatur kann zwischen 10°C und dem Siedepunkt des Reaktionsgemisches liegen.

Die Ueberführung von S(-)-N-(1'-Methyl-2'-hydroxyethyl)-2,6-dimethyl-anilin der Formel III in das S(+)-N-(1'-Methyl-2'-hydroxyethyl)-N-chloracetyl-2,6-dimethylanilin der Formel IV erfolgt durch Umsetzung mit einem Chloracetylierungsmittel, wie Chloracetylchlorid oder Chloressigsäureanhydrid in Gegenwart einer Base in einem inerten Lösungsmittel. Als Basen sind insbesondere Alkalicarbonate und Hydrogencarbonate, sowie tertiäre Amine, wie Triethylamin und Pyridin geeignet. Als inerte Lösungsmittel kommen Kohlenwasserstoffe, wie Hexan, Cyclohexan, Benzol, Toluol und Chlorbenzol in Betracht. Das Chloracetylierungsmittel kann in stöchiometrischer Menge oder in einem geringen Unterschuss eingesetzt werden. In der Praxis haben sich Molverhältnisse von S(-)-N-(1'-Methyl-2'-hydroxyethyl)-2,6-dimethylanilin der Formel III zu Chloracetylierungsmittel von 1:1 bis 1:0.95 bewährt. Die Umsetzung wird unter Kühlung oder bei mässig erhöhter Temperatur durchgeführt, wobei sich insbesondere Temperaturen von 0° bis 50°C als geeignet erwiesen haben.

Die Verätherung der 2'-Hydroxygruppe des s(+)-N-(1'-Methyl-2'-hydroxyethyl)-N-chloracetyl-2,6-dimethylanilins der Formel IV kann vorteilhaft in der Weise durchgeführt werden, dass man die Substanz in Gegenwart einer starken Säure in absolutem Methanol bei Rückflusstemperatur erhitzt. Dabei kommen als starke Säuren insbesondere Schwefelsäure und p-Toluolsulfonsäure in Betracht, wobei die Menge dieser Säuren 0,1 bia 0,3 Mol pro Mol S(+)-N-(1'-Methyl-2'-hydroxyethyl)-N-chlor-acetyl-2,6-dimethylanilin der Formel IV betragen kann. Die Veretherung kann vorteilhaft in Gegenwart eines wasserbindenden Mittels durchgeführt werden, wobei als wasserbindende Mittel insbesondere Ketale, wie 2,2-Di-methoxypropan, geeignet sind. Das wasserbindende Mittel wird in äquimolarer Menge oder im Ueberschuss angewandt.

Das nach dem erfindungsgemässen Verfahren herstellbare S(-)-N-(1'-Methyl-2'-methoxyethyl)-N-chloracetyl-2,6-dimethylanilin weist gemäss $^1$H-NMR-spektroskopischer Bestimmung mit chiralem Schiff-Reagens [Europium-tris-(3-trifluormethyl-hydroxymethylen)-d-campher] eine optische Reinheit von 95 % auf. Es besitzt gegenüber dem bisher bekannten Diastereomerengemisch von N-(1'-Methyl-2'-methoxyethyl)-N-chloracetyl-2,6-dimethylaninilin eine deutlich überlegene herbizide Wirkung gegen Unkräuter, während die Phytotoxizität gegenüber Kulturpflanzen im Vergleich zum bekannten Diastereomerengemisch nicht gesteigert ist. Es kann daher in bekannter Weise zu herbiziden Mitteln verarbeitet und zur Bekämpfung von Unkräutern in Kulturpflanzen verwendet werden.

In der vorliegenden Beschreibung wurde die Bezeichnung der absoluten Konfiguration nach "Experientia", Band 12, Seiten 81-94 (1956) vorgenommen.

Die Erfindung betrifft auch herbizide Mittel, welche das aktive Enantiomere der Formel I enthalten, sowie Verfahren zur pre- oder postemergenten Unkrautbekämpfung.

Die erfindungsgemässen Mittel können in den üblichen Formulierungen vorliegen und werden in an sich bekannter Weise hergestellt durch Vermischen und Vermahlen von optisch aktivem Wirkstoff der Formel 1 mit geeigneten Trägerstoffen, gegebenenfalls unter Zusatz von Dispersions- und Lösungsmitteln. In dieser Weise werden nach bekannten Techniken Stäubemittel, Streumittel, Granulate, Spritzpulver, Fasten, Emulsionen, emulgierbare Konzentrate oder Lösungen hergestellt.

Die Aufwandmengen bei der Bekämpfung von Unkräutern betragen in der Regel 0,1 bis 10 kg Wirkstoff pro ha, vorzugsweise 0,25 bis 5 kg/ha.

Das erfindungsgemässe S(-)-N(1'-Methyl-2'-methoxyethyl)-N-chloracetyl-2,6-dimethyl-anilin ist dem Racemat in Bezug auf die herbizide Wirkung überlegen und zeichnet sich im Vergleich zum Racemat durch verstärkte Wirkung gegenüber folgenden Unkrautarten aus: Avena fatua (Windhafer), Cyperus esculentus, Amaranthus retroflexus, Galium aparine und Solanum nigrum. Ueberraschend und von grosser Bedeutung ist die gute Wirkung gegen Cyperus esculentus. Dieses weit verbreitete Unkraut trotzt den meisten Herbiziden und wird daher heute den problemunkräutern zugerechnet. Mit dem erfindungsgemässen S(-)-N-(1'-Methyl-2'-methoxy-ethyl)-N-chloracetyl-2,6-dimethyl-anilin kann Cyperus esculentus in Nutzpflanzenkulturen mit äusserst geringen Aufwandmengen bekämpft werden.

Die Herstellung des erfindungsgemässen Isomeren von N-(1'-Methyl-2'-methoxyethyl)-N-chloracetyl-2,6-dimethylanilin mit S(-)-Konfiguration wird durch die nachstehenden Beispiele näher erläutert. Temperaturen werden in Centigraden angegeben, Teile und Prozentangaben beziehen sich auf das Gewicht.

**Beispiel 1**

1. <u>Herstellung von racemischem N-(2,6-Dimethyl-phenyl)-alanin</u>

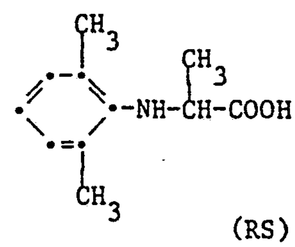

(RS)

a) N-(2,6-Dimethyl-phenyl)-alaninmethylester

745 ml (6 mol) 2,6-Dimethylanilin, 555 g (6,6 mol) $NaHCO_3$ und 2007 ml (18 mol) 2-Brompropionsäuremethylester werden in einen 4,5 l Sulfierkolben gegeben. Unter Rühren und Ueberleiten von trockenem Stickstoff wird während 1 Stunde langsam auf 120-125°C Badtemperatur erhitzt. Unter $CO_2$-Entwicklung wird die dunkel werdende Mischung 18 Stunden bei dieser Temperatur weitergerührt. Nach dem Abkühlen giesst man das Reaktionsgemisch auf 3 l Eiswasser und extrahiert portionenweise mit Essigester. Die Essigester-Fraktionen werden mit Natriumsulfat getrocknet und am Rotationsverdampfer bei 40°C eingeengt. Der überschüssige 2-Brompropionsäuremethylester wird am Vakuum abgezogen und der verbleibende

Rückstand über eine verspiegelte 60 cm Vigreuxkolonne fraktioniert destilliert. Man erhält 990,3 g Ester vom Kp 133-134°C (13 mbar).

b) N-(2,6-Dimethyl-phenyl)-alanin

2232 g (10,78 mol) des obigen Esters werden zusammen mit 6,6 l Natronlauge (2 mol/l) bei Raumtemperatur gerührt. Die Innentemperatur steigt dabei allmählich auf 36°C an. Nach 6 Stunden ist die Emulsion in eine Lösung übergegangen, in der nach GC kein Ausgangsmaterial mehr vorhanden ist. Unter Rühren und Kühlen (auf 0-5°C) wird die alkalische Lösung mit konz. Salzsäure auf pH 3,5 gestellt. Die sich als Oel ausscheidende Säure wird nach längerem Rühren kristallin. Die resultierende Suspension wird portionenweise mit Essigester extrahiert. Die organische phase wird mit Wasser gewaschen und über Natriumsulfat getrocknet. Nach dem Abdestillieren des Essigesters erhält man die racemische Säure als festen Rückstand. Dieser wird aus Cyclohexan umkristallisiert. Die Ausbeute beträgt 1842 g, der Fp 86-89°C.

2. Racematspaltung des N-(2,6-Dimethyl-phenyl-alanins mit R(+)-1-phenylethylamin

921 g (4,77 mol) des racemischen N-(2,6-Dimethyl-phenyl)alanins werden unter Rühren in 3,7 l Diisopropylether gelöst und mit 625 ml (4,77 mol) R(+)-1-phenylethylamin versetzt. Die Innentemperatur steigt auf 45°C an. Nach kurzer Zeit beginnt das Salz auszukristallisieren. Man lässt über Nacht bei Raumtemperatur stehen, filtriert ab und wäscht mit Diisopropylether. Das Nutschgut wird abwechselnd aus Essigester und Acetonitril bis zur Konstanz des Schmelzpunktes und des Drehwertes umkristallisiert. Man erhält 342 g Phenylethylamin-Salz mit Fp 148-150°C und einem Drehwert $[\alpha]_D^{20} = -16 \pm 1°$ (c = 1,425 % Gewicht/Vol. in Ethanol).

342 g (1,088 mol) dieses Salzes werden in 2,5 l Essigester suspendiert und unter kräftigem Rühren bei 10-15°C mit 272 ml (1,088 mol) Salzsäure (4mol/l) versetzt. Nach 10 Minuten wird die organische Phase abgetrennt, mit Wasser und gesättigter Kochsalzlösung gewaschen, über Natriumsulfat getrocknet und eingeengt. Der kristalline Rückstand wird durch zweimaliges Umkristallisieren aus Benzin und eimmal aus n-Hexan unter Zusatz von Tierkohle gereinigt. Man erhält so 140 g S(-)-(2,6-Dimethyl-phenyl)-alanin. Fp: 91-93°C; $[\alpha]^{20}_D = -9 \pm 1°$ (c = 1,325 % Gewicht/Vol. in Ethanol).

3. Herstellung von S(-)-N-(1'-Methyl-2'-hydroxyethyl)-2,6-dimethyl-anilin

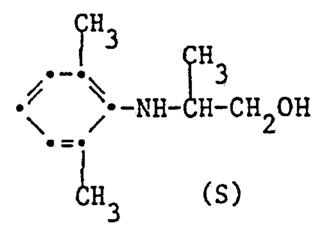

(S)

Eine Lösung von 168,3 g (0,871 mol) S(-)-N-(2,6-Dimethylphenyl)-alanin in 1500 ml wasserfreiem Tetrahydrofuran wird unter Feuchtigkeitsausschluss und Ueberleiten von trockenem Stickstoff zum Rückfluss erhitzt.

Nun lässt man sehr langsam 166 ml (1,66 mol) Boran Dimethylsulfid Komplex zutropfen. Es setzt sofert $H_2$-Entwicklung ein. Nach 20 Stunden Rühren unter Rückfluss wird das Reaktionsgemisch auf 5°C abgekühlt und tropfenweise mit soviel Methanol versetzt, bis sich kein Wasserstoff mehr entwickelt. Man engt bei Normaldruck ein (NaOCl-Lösung dazwischenschalten) nimmt den öligen Rückstand in Ether auf und extrahiert diesen portionenweise mit insgesamt 600 ml Salzsäure (2mol/l). Die wässrig-salzsauren Phasen werden vereinigt, unter Eiskühlung mit konz. Natronlaugeauf pH 8 gestellt und mit Ether ausgeschüttelt. Die vereinigten Ether-Fraktionen werden mit Wasser und gesättigter Kochsalzlösung gewaschen über Natriumsulfat getrocknet und eingedampft. Das zurückbleibende Oel wird am Hochvakuum fraktioniert destilliert. Man erhält 130,1 g S(-)-N-(1'-Methyl-2'-hydroxyethyl)-2,6-dimethylanilin. Kp: 95-96°C ($10^{-3}$ mbar); $[\alpha]_{365}^{20} = -13°$ (c = 1 767 % Gewicht/vol in Methanol)

4. Herstellung von S(+)-N-(1'-Methyl-2'-hydroxyethyl)-N-chloracetyl1 2,6-dimethylanilin

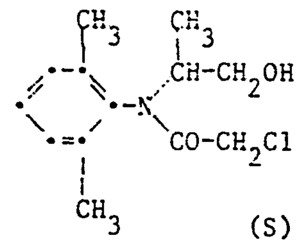

(S)

103 g (0,547 mol) S(-)-N-(1'-Methyl-2'-hydroxyethyl)-2,6-dimethyl-anilin werden mit 58 g (0,547 mol) Natriumcarbonat in 1 l Benzol vermischt. Unter gutem Rühren lässt man bei 25-30°C langsam 43,6 ml (0,547 mol) Chloracetylchlorid, gelöst in 50 ml Benzol, zutropfen. Das Reaktionsgemisch wird anschliessend 2 Stunden bei Raumtemperatur ausgerührt und dann filtriert. Das Benzol-Filtrat wird mit Essigester verdünnt und im Scheidetrichter mit Wasser, Salzsäure (2mol/l), 10%-iger Natriumbicarbonatlösung, Wasser und gesättigter Kochsalzlösung ausgeschüttelt. Die organische phase trocknet man mit Natriumsulfat und engt sie am Rotationsverdampfer ein. Das als Rückstand verbleibende Oel kristallisert man aus Diisopropylether. Man erhält so das obige S(+)-N-(1'-Methyl-2'-hydroxy-ethyl)-N-chloracetyl-2,6-dimethylanilin mit einer Ausbeute von 111,2 g und einem Fp. von 58-60°C.

$[\alpha]_{365}^{20} = +46°$ (c = 2,247 % Gewicht/Vol in Methanol).

5. Herstellung von S(-)-N-(1'-Methyl-2'-methoxyethyl)-N-chloracetyl-2,6-dimethyl-anilin

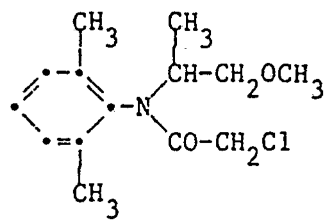

111,2 g (0,435 mol) S(+)-N-(1'Methyl-2'-hydroxyethyl)-N-chloracetyl-2,6-dimethyl-anilin werden in 1,1 l abs. Methanol gelöst, mit 11,9 ml (0,2175 mol) 98 %-ige Schwefelsäure versetzt und 15 Stunden am Rückfluss gekocht. Die Reaktionslösung wird anschliessend am Rotationsverdampfer eingeengt und der ölige Rückstand in Essigester aufgenommen. Man wäscht die organische Phase mit Wasser und Natriumbicarbonatlösung neutral, trocknet über Natriumsulfat und zieht das Lösungsmittel am Vakuum ab. Das zurückbleibende Oel wird am Hochvakuum destilliert. Kp 118-124°C/ 0,01 mbar. Ausbeute 90,9 g. Das Destillationsprodukt wird aus Benzin in Trockeneis umkristallisiert und ergibt 76,5 g kristallines Titelprodukt vom Fp. 27-30°C mit einem Drehwert $[\alpha]_{365}^{20} = -39°$ (c = 1,995 % Gewicht/Vol in n-Hexan), und einer optischen Reinheit von 98 %.

**Beispiel 2**

Zum Nachweis der verbesserten Wirkung wurden in einem Herbizidversuch im Gewächshaus das erfindungsgemässe S(-)-Isomere und das Racemat des N-(1'-Methyl-2-methoxyethyl)-N-chloracetyl-2,6-dimethyl-anilins verglichen. Beide Wirkstoffe wurden zu einem 25 %-igen Emulsionskonzentrat folgender Zusammensetzung aufgearbeitet.

25 Teile Wirkstoff
5 Teile einer Mischung von Nonylphenolpolyoxyethylen und Calciumdodecylbenzolsulfat
15 Teile Cyclohexanon
55 Teile Xylol.

Dieses Konzentrat wurde dann mit Wasser bis zu der gewünschten Wirkstoffkonzentration verdünnt.

Die herbizideWirkung wurde wie folgt ermittelt:

**Pre-emergente Herbizid-Wirkung (Keimhemmung)**

Im Gewächshaus wurden pflanzensamen in Töpfe von 12-15 cm Durchmesser gesätzt. Unmittelbar danach wurde die Erdoberfläche mit einer wässrigen Dispersion der Versuchspflanzen, erhalten aus dem

Emulsionskonzentrat, behandelt. Es wurden Konzentrationsreihen angewendet und die Menge Wirkstoff, die aufgetragen wurde, betrug zwischen 2 kg und 32 g pro Hektar. Die Töpfe wurden dann im Gewächshaus bei einer Temperatur von 22-25° und 50-70 % rel. Luftfeuchtigkeit gehalten und der Versuch nach 3 Wochen ausgewertet, wobei der Zustand der Pflanzen nach folgender Notenskala bonitiert wurde:

1 = Pflanzen nicht gekeimt oder total abgestorben
2-3 = sehr starke Wirkung
4-6 = mittlere Wirkung
7-8 = geringe Wirkung
9 = keine Wirkung (wie unbehandelte Kontrolle).

Die Resultate sind in den nachstehenden Tabellen zusammengefasst:

| | S(−)-Isomer | | | | | | | Racemat | | | | | | |
|---|---|---|---|---|---|---|---|---|---|---|---|---|---|---|
| Aufwandmenge g/ha | 2000 | 1000 | 500 | 250 | 125 | 63 | 32 | 2000 | 1000 | 500 | 250 | 125 | 63 | 32 |
| Pflanze | | | | | | | | | | | | | | |
| Monocotyledonen | | | | | | | | | | | | | | |
| Gerste | 3 | 4 | 4 | 6 | 9 | 9 | 9 | 4 | 5 | 7 | 9 | 9 | 9 | 9 |
| Weizen | 3 | 4 | 6 | 9 | 9 | 9 | 9 | 6 | 7 | 9 | 9 | 9 | 9 | 9 |
| Mais | 5 | 6 | 7 | 7 | 8 | 9 | 9 | 5 | 7 | 8 | 9 | 9 | 9 | 9 |
| Hirse | 1 | 3 | 3 | 6 | 7 | 9 | 9 | 2 | 3 | 4 | 7 | 9 | 9 | 9 |
| Reis | 1 | 1 | 2 | 3 | 8 | 8 | 8 | 2 | 3 | 3 | 4 | 6 | 8 | 9 |
| Avena fatua | 3 | 5 | 8 | 9 | 9 | 9 | 9 | 7 | 7 | 9 | 9 | 9 | 9 | 9 |
| Bromus tectorum | 1 | 2 | 2 | 3 | 3 | 9 | 9 | 1 | 1 | 2 | 2 | 3 | 6 | 9 |
| Lolium perenne | 1 | 2 | 2 | 2 | 4 | 7 | 9 | 1 | 2 | 2 | 4 | 9 | 9 | 9 |
| Alopecurus myos. | 2 | 5 | 6 | 9 | 9 | 9 | 9 | 3 | 3 | 6 | 9 | 9 | 9 | 9 |
| Digitaria sang. | 1 | 1 | 2 | 2 | 2 | 3 | 3 | 1 | 1 | 1 | 2 | 2 | 4 | 8 |
| Echinochloa grus calli | 1 | 1 | 1 | 1 | 2 | 3 | 3 | 1 | 1 | 2 | 2 | 3 | 4 | 4 |
| Sorghum halepense | 1 | 1 | 1 | 4 | 4 | 5 | 5 | 1 | 1 | 1 | 4 | 4 | 7 | 9 |
| Rottboellia exaltata | 3 | 5 | 7 | 8 | 9 | 9 | 9 | 3 | 7 | 8 | 9 | 9 | 9 | 9 |
| Cyperus esculentus | 1 | 1 | 3 | 3 | 3 | 5 | 8 | 2 | 2 | 3 | 4 | 6 | 9 | 9 |
| Poa trivialis | 1 | 1 | 2 | 3 | 4 | 6 | 7 | 1 | 2 | 2 | 3 | 7 | 8 | 9 |
| Setaria glauca | 1 | 1 | 1 | 1 | 2 | 3 | 3 | 1 | 1 | 1 | 2 | 3 | 8 | 9 |
| Setaria italica | 1 | 1 | 1 | 1 | 2 | 3 | 3 | 1 | 1 | 1 | 1 | 2 | 4 | 5 |
| Pennisetum glaucum | 1 | 1 | 1 | 1 | 4 | 8 | 9 | 1 | 1 | 2 | 2 | 6 | 7 | 8 |
| Festucca ovina | 1 | 1 | 1 | 1 | 5 | 6 | 6 | 1 | 1 | 1 | 2 | 5 | 8 | 9 |

| | S(-)-Isomer | | | | | | | Racemat | | | | | | |
|---|---|---|---|---|---|---|---|---|---|---|---|---|---|---|
| Aufwandmenge g/ha | 2000 | 1000 | 500 | 250 | 125 | 62 | 32 | 2000 | 1000 | 500 | 250 | 125 | 62 | 32 |
| Pflanze | | | | | | | | | | | | | | |
| Dicotyledonen | | | | | | | | | | | | | | |
| Soja | 6 | 7 | 8 | 8 | 9 | 9 | 9 | 7 | 8 | 9 | 9 | 9 | 9 | 9 |
| Raps | 8 | 9 | 9 | 9 | 9 | 9 | 9 | 9 | 9 | 9 | 9 | 9 | 9 | 9 |
| Baumwolle | 5 | 7 | 8 | 9 | 9 | 9 | 9 | 6 | 8 | 8 | 9 | 9 | 9 | 9 |
| Zuckerrübe | 4 | 7 | 8 | 9 | 9 | 9 | 9 | 7 | 8 | 9 | 9 | 9 | 9 | 9 |
| Abutilon sp. | 2 | 4 | 7 | 8 | 9 | 9 | 9 | 5 | 6 | 9 | 9 | 9 | 9 | 9 |
| Sida spinosa | 2 | 3 | 3 | 4 | 5 | 7 | 8 | 3 | 4 | 4 | 6 | 7 | 8 | 9 |
| Xanthium sp. | 9 | 9 | 9 | 9 | 9 | 9 | 9 | 8 | 8 | 8 | 9 | 9 | 9 | 9 |
| Amaranthus retroflexus | 1 | 1 | 1 | 1 | 1 | 2 | 4 | 1 | 1 | 1 | 1 | 2 | 4 | 8 |
| Chenopodium album | 1 | 3 | 4 | 6 | 8 | 9 | 9 | 2 | 2 | 7 | 7 | 8 | 9 | 9 |
| Ipomoea purpurea | 4 | 5 | 6 | 7 | 8 | 9 | 9 | 5 | 6 | 7 | 8 | 9 | 9 | 9 |
| Sinapis alba | 3 | 7 | 9 | 9 | 9 | 9 | 9 | 6 | 9 | 9 | 9 | 9 | 9 | 9 |
| Stellaria media | 1 | 4 | 8 | 8 | 9 | 9 | 9 | 2 | 9 | 9 | 9 | 9 | 9 | 9 |
| Chrysanthemum leucum | 1 | 6 | 9 | 9 | 9 | 9 | 9 | 3 | 7 | 9 | 9 | 9 | 9 | 9 |
| Galium aparine | 2 | 3 | 9 | 9 | 9 | 9 | 9 | 4 | 5 | 9 | 9 | 9 | 9 | 9 |
| Viola tricolor | 2 | 2 | 3 | 3 | 9 | 9 | 9 | 3 | 4 | 4 | 6 | 6 | 9 | 9 |
| Veronica sp. | 1 | 1 | 1 | 1 | 1 | 1 | 9 | 1 | 1 | 1 | 1 | 2 | 9 | 9 |
| Leptochloa imbricata | 1 | 1 | 1 | 1 | 1 | 3 | 3 | 1 | 1 | 1 | 1 | 1 | 4 | 5 |
| Portulacca | 1 | 1 | 1 | 3 | 9 | 9 | 9 | 1 | 1 | 5 | 7 | 9 | 9 | 9 |
| Solanum nigrum | 1 | 2 | 3 | 3 | 6 | 8 | 9 | 2 | 2 | 6 | 6 | 6 | 7 | 8 |

Die optisch aktive Verbindung zeigt bei annähernd gleicher Toleranz (Noten 7-9) gegenüber den Nutzpflanzen eine verbesserte Herbizidwirkung gegen die mit lateinischen Namen gekennzeichneten Unkräuter als das Racemat.

Die optisch aktive Verbindung zeigt bei annähernd gleicher Toleranz (Noten 7-9) gegenüber den Nutzpflanzen eine verbesserte Herbizidwirkung gegen die mit lateinischen Namen gekennzeichneten Unkräuter als das Racemat.

**Beispiel 3**

**Wuchshemmung bei Gräsern**

In Kunststoffschalen mit Erde-Torf-Sand-Gemisch (6:3:1) wird ein Grasgemisch enthaltend Poa pratensis, Dactylis glomerata Lolium perenne, Festuca rubra, Festuca ovina, Cynosurus crystatus, Agropyron repens und Bromus inermis im Gewächshaus angesät und nach Bedarf bewässert. Die aufgelaufenen Gräser werden wöchentlich bis auf ca. 4 cm Höhe zurückgeschnitten und ca. 50 Tage nach der Aussaat und einen Tag nach dem letzten Schnitt mit der wässrigen Spritzbrühe eines zu prüfenden Wirkstoffes besprüht. Die Wirkstoffmenge beträgt umgerechnet 2 oder 1 kg Aktivsubstanz pro Hektar. 21 Tage nach der Applikation wird das Durchschnitts-Wachstum der Gräser gemessen und in % des Wachstums eines unbehandelten Grasgemisches ausgedrückt.

Die geprüften Wirkstoffe sind

N-(1'-Methyl-2'-methoxyethyl)-N-chloracetyl-2,6-dimethylanilin-, S(-) Isomer

N-(1-Methyl-2'-methoxyethyl)-N-chloracetyl-2,6-dimethylanilin, Racemat

Die Resultate sind wie folgt:

| Aufwandmenge kg/ha | 1 | 2 |
|---|---|---|
| Wirkstoff | | |
| S(-)-Isomer | 24 % | 17 % |
| Racemat | 27 % | 17 % |

**Beispiel 4**

**Wuchshemmung bei Getreide**

In Kunststofftöpfen mit sterilisierter Erde werden die Getreidearten Hordeum vulgare (Sommergerste) und Secale (Sommerroggen) im Gewächshaus angesät und nach Bedarf bewässert. Die Sprösslinge werden ca. 21 Tage nach der Aussaat mit der wässrigen Spritzbrühe eines Wirkstoffes der Formel I besprüht. Die Wirkstoffmenge beträgt umgerechnet 0,5/1,0/ 2,0 und 4,0 kg Aktivsubstanz pro Hektar. 28 Tage nach Applikation wird das Wachstum des Getreides beurteilt. Hierbei misst man die durchschnittliche Höhe der Getreidepflanzen, und gibt sie in %, im Vergleich zu unbehandelten Kontrollpflanzen wieder.

Die Resultate sind wie folgt:

| Gerste: Aufwandmenge kg/ha | 0.5 | 1 | 2 |
|---|---|---|---|
| Wirkstoff | | | |
| S(-)-Isomer | 71 | 51 | 8 |
| Racemat | 72 | 62 | 10 |

| Roggen: Aufwandmenge kg/ha | 0.5 | 1 | 2 |
|---|---|---|---|
| S(-)-Isomer | 44 | 16 | 11 |
| Racemat | 56 | 33 | 18 |

**Patentansprüche**

1. Optisch aktives S(-)N-(1'-Methyl-2'-methoxyethyl)-N-chloracetyl-2,6-dimethylanilin der Formel

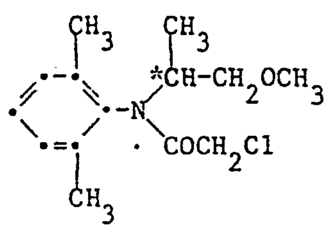

(I) .

2. Verfahren zur Herstellung von S(-)N-(1'-Methyl-2'-methoxyethyl)-N-chloracetyl-2,6-dimethyl-anilin, dadurch gekennzeichnet, dass man S(-)-N-(2,6-dimethylphenyl)-alanin der Formel II

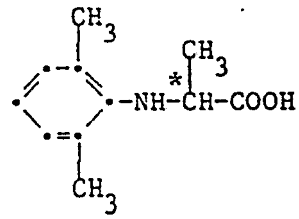

(II)

zu S(-)-N-(1'-Methyl-2'-hydroxyethyl)-2,6-dimethylanilin der Formel III

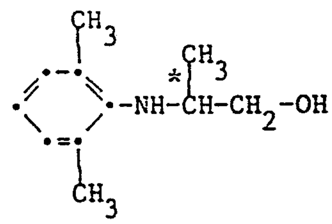

(III)

reduziert, dieses am Stickstoff chloracetyliert und das erhaltene S(+)-N-(1'-Methyl-2'-hydroxyethyl)-N-chloracetyl-2,6-dimethylanilin der Formel IV

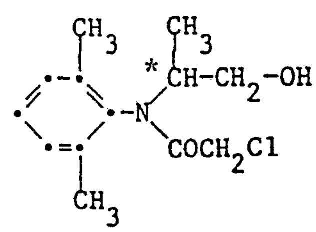

(IV)

anschliessend in Gegenwart einer starken Säure mit Methanol an der 2'-Hydroxygruppe veräthert.

3. Herbizides Mittel, dadurch gekennzeichnet, dass es neben inerten Zutaten als Wirkstoff das optisch aktive Isomere S(-)N-(1'-Methyl-2'-methoxyethyl)-N-chloracetyl-2,6-dimethylanilin enthält.

4. Verfahren zur Bekämpfung von Unkräutern in Kulturen von Nutzpflanzen, dadurch gekennzeichnet, dass man die Anbaufläche der Nutzpflanzen mit einer wirksamen Menge von S(-)N-(1'-Methyl-2'-methoxyethyl)-N-chloracetyl-2,6-dimethylanilin behandelt.

5. Verfahren gemäss Anspruch 4 zur Bekämpfung von Unkräutern in Kulturen von Getrei de, Mais, Raps, Soja, Baumwolle und Zuckerrüben.

6. Verfahren gemäss Ansprüchen 4 und 5 zur speziellen Bekämpfung von Cyperus esculentus.

**Claims**

1. Optically active S(-)-N-(1'-methyl-2'-methoxyethyl)-N-chloroacetyl-2,6-dimethylaniline of the formula

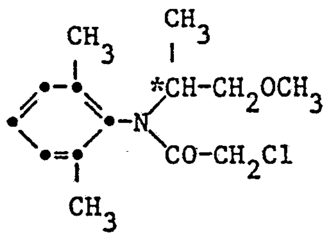

(I)

.

2. A process for the preparation of S(-)-N-(1,-methyl-2'-methoxy, ethyl)-N-chloroacetyl-2,6-dimethylaniline, which process comprises reducing S(-)-N-(2,6-dimethylphenyl)alanine of the formula II

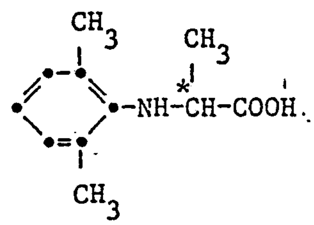

(II)

to S(-)-N-(1'-methyl-2'-hydroxyethyl)-2,6-dimethylaniline of the formula III

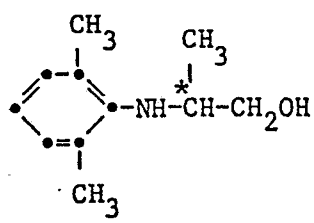

(III),

chloroacylating this compound at the nitrogen atom and subsequently etherifying the resultant S(+)-N-(1'-methyl-2'-hydroxyethyl)-N-chloroacetyl-2,6-dimethylaniline of the formula IV

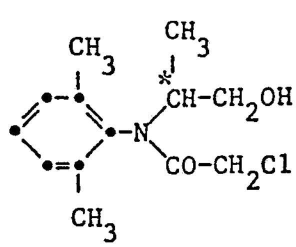

(IV)

in the presence of a strong acid with methanol at the 2'-hydroxy group.

3. A herbicidal composition which contains as active ingredient the optically active isomer of S(-)-N-(1'-methyl-2'-methoxyethyl)-N-chloroacetyl-2,6-dimethylaniline, together with inert adjuvants.

4. A method of controlling weeds in crops of useful plants, which comprises treating the locus of said useful

plants with a herbicidally effective amount of S(-)-N-(1'-methyl-2'-methoxy-ethyl)-N-chloroacetyl-2,6-dimethylaniline.

5. A method according to claim 4 for controlling weeds in crops of cereal, maize, rape, soybeans, cotton and sugar beet.

6. A method according to either of claims 4 or 5 for controlling Cyperus esculentus.

**Revendications**

1. La S(-)-N-(1'-méthyl-2'-méthoxyéthyl)-N-chloràcétyl-2,6-diméthylaniline, possédant l'activité optique, de formule

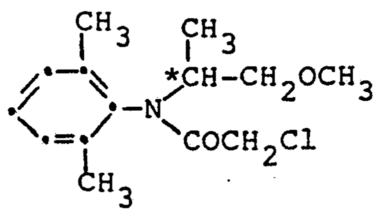

(I)

2. Procédé de préparation de la S(-)-N-(1'-méthyl-2'-méthoxyéthyl)-N-chloracétyl-2,6-diméthylaniline, caractérisé en ce que l'on réduit la S(-)-N-(2,6-diméthyl-phényl)-alanine de formule II

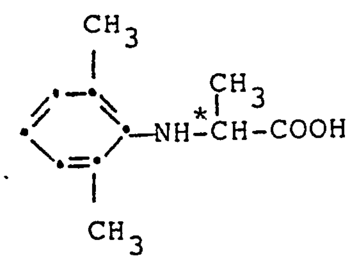

(II)

en la S(-)-N-(1'-méthyl-2'-hydroxyéthyl)-2,6-diméthyl-aniline de formule III

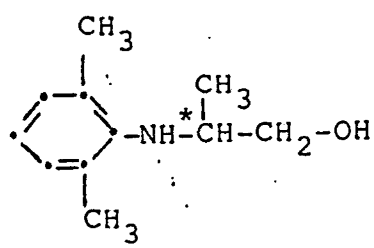

(III)

qu'on chloracétyle sur l'azote, ce qui donne la S(+)-N-(l'-méthyl-2'-hydroxyéthyl)-N-chloracétyl-2,6-diméthyl-aniline de formule IV

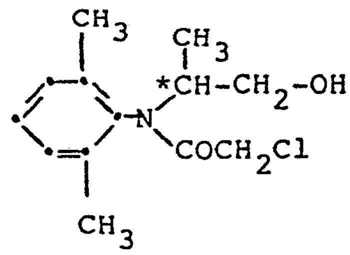

(IV)

qu'on étherifie ensuite sur le groupe 2'-hydroxy par le méthanol en présence d'un acide fort.

3. Produit herbicide, caractérisé en ce qu'il contient en tant que substance active, avec des additifs inertes, l'isomère optique S(-)-N-(1'-méthyl-2'-méthoxy-éthyl)-N-chloracétyl-2,6-diméthylaniline.

4. Procédé pour combattre les mauvaises herbes dans les cultures de végétaux utiles, caractérisé en ce que l'on traite la surface de culture des végétaux utiles par une quantité efficace de S(-)-N-(1'-méthyl-2'-méthoxyéthyl)-N-chloracétyl-2,6-diméthylaniline.

5. Procédé selon la revendication 4 pour combattre les mauvaises herbes dans les cultures de céréales, de maïs, de colza, de soya, de coton et de betteraves à sucre.

6. Procédé selon les revendications 4 et 5 pour combattre spécialement Cyperus esculentus.